# EUROPEAN PATENT SPECIFICATION

(11) **EP 1 079 490 B1**
(45) Date of publication and mention of the grant of the patent: **27.05.2009**
(21) Application number: 00202973.4
(22) Date of filing: 24.08.2000
(51) Int. Cl.: H02G 3/06

(54) **Device and method for mounting conductors along a ceiling**
Vorrichtung und Verfahren zum Montieren von Leitern eine Decke entlang
Dispositif et procédé de montage de conducteurs le long d'un plafond

(30) Priority: 25.08.1999 NL 1012904
(43) Date of publication of application: 28.02.2001
(73) Proprietor: B.V. Kunststoffenindustrie Attema, NL-4203 NN Gorinchem (NL)
(72) Inventor: de Hoog, Antonie, 4213 DE Dalem (NL)
(74) Representative: Mertens, Hans Victor

(56) References cited:
- US-A- 2 447 026
- US-A- 4 096 349
- US-A- 5 007 853
- US-A- 5 913 544

## Description

The invention relates to a device for fitting conductors, such as single- and double-insulated electrical conductors, light guides in the form of glass-fibre cables, and the like, along a ceiling, comprising at least two conductor support members and at least one securing member. The invention also relates to a method for fitting one or more substantially elongate conductor support members, which are intended to accommodate at least one conductor, to the ceiling.

The installation of electrical conductors and electrical boxes, such as junction boxes, along a ceiling, as is required, for example, above system ceilings, is a laborious task for the fitter. The often considerable length of conductors and the boxes have to be fitted above the head of the fitter and have to be fixed to the ceiling at regular intervals.

The use of saddles or brackets for fixing the conductors requires large amounts of difficult installation work, owing to the relatively short distance between successive saddles or brackets.

The use of an elongate, relatively rigid support for the conductors considerably reduces the installation work, since the support requires only a small number of securing points per unit length. An installation aid for flexible conductors of this nature is known from Dutch patent 1006549, having an elongate body in the form of a profiled strip, and with one or more support members for supporting power or signal conductors which extend along the body. In a preferred embodiment, the body of the installation aid comprises a web part, as seen in cross section, which extends downwards from the ceiling and is provided with at least one support member projecting transversely with respect to the web part, which support member may extend in the longitudinal direction of the body for the purpose of supporting the conductors.

One problem is that elongate installation aids of this nature are difficult to secure to the ceiling. This is because if the elongate installation aid is secured to the ceiling in the vicinity of one end, for example using a screw connection, the assembly aid will be pulled downwards at the other end due to the force of gravity, which leads to a force being exerted on the screw connection at the first end, this force being considerably increased by the lever action of the elongate installation aid. In many cases, this force will release the securing on the ceiling, for example by pulling the screw connection out of the ceiling, or will damage the installation aid as a result of the installation aid breaking or bending in the vicinity of the screw.

Therefore, a drawback of the known installation aid is that it has to be supported at at least one of the ends of the installation aid which is at a distance from the installation position at the start of installation, and a fitter usually has to summon at least one other fitter or use an auxiliary structure. In the case of great lengths, the installation aid comprises various segments which are to be fitted in line with one another, so that the fitter repeatedly has to summon the help of colleagues during the course of his work. In these cases, conductors and electrical boxes may already be prefitted on the installation aid, making the entire unit heavier and more difficult to handle, in particular at the start of installation.

Obviously, the abovementioned problem occurs not only during installation of an installation aid along a ceiling, but also during installation along beams, profiled sections, optionally sloping walls or other surfaces. Therefore, in the context of the present invention, the term ceiling is also understood as meaning any surface along which an installation aid during installation is subjected to a force which is at least partially directed away from this surface owing to the force of gravity.

The object of the invention is to provide a device with which a single fitter can secure great lengths of conductors quickly and easily along a ceiling.

To achieve this object, the device according to the invention is characterized in that the at least one securing member is pivotably connected, by means of at least one pivot member, to an end of each of the at least two conductor support members.

Pivotably connected electrical conductors are known from various publications. US 40 96 349 describes a flexible connector for connecting two ends of elongate light fittings to each other. However, this connector is unsuitable for a fitter to quickly and easily secure great lengths of light fitting to a ceiling, since there is no securing member pivotably connected to the fittings and since the connector is unable to support the fittings during installation thereof, because the electrical conductor wires, which also form the mechanical connection, would be damaged or would come out of their fixings in the event of a tensile force being exerted.

Furthermore, US 24 47 026 describes a pivotable connector which is used as a connection between two electrical lines. However, this connector does not allow easy and rapid fitting of great lengths of line to a ceiling by a single fitter, since the pivotable connector does not allow the lines to be arranged parallel to one another and since there is no securing member pivotably connected to the lines.

With a device according to the invention, it is possible to first fit a securing member on the ceiling (the at least one securing member preferably comprising securing means for securing the securing member to the ceiling), while each of the at least two conductor support members which are connected thereto via the at least one pivot member and may be elongate, but may also be of relatively short length, can hang downwards parallel to one another, substantially directly below the securing member, if the at least one pivot member allows each of the at least two conductor support members connected thereto to pivot through 90°, so that the device can easily be handled by one person. After the securing member has been fitted, each conductor support member connected thereto can be pivoted upwards in order to be fitted to the ceiling, the securing member which has already been fitted supporting the conductor support member at one end. It is possible for two conductor support members to be connected to one securing member in order for the conductor support members or, more generally, n (n = integer, greater than 1) conductor support members to be fitted in line with one another by connecting at least n-1 securing members to one another in order to fit the conductor support members in line with one another. The pivot members make it possible to form the interconnected conductor support members into a bundle or roll before and during fitting. Given a suitably selected, sufficiently rigid dimensioning of the conductor support members, these members only have to be secured to the ceiling at their ends, for example by means of the securing members connected thereto.

It is possible for the conductor support member, the securing member and the pivot member to be designed as a single unit or for combinations of two of these three members to be designed as a single unit.

In a preferred embodiment of the device according to the invention, the connection between the conductor support member and the pivot member is releasable, the pivot member advantageously being provided with a projection which is adapted to clamp onto the conductor support member. As a result of this measure, the pivot member, optionally in combination with the securing member, can be produced separately from the conductor support member, and the conductor support member can be produced by means of a relatively inexpensive extrusion method.

Preferably, the at least one pivot member is provided with a hinge, in particular an integral hinge, taking into account the fact that the device according to the invention can be produced completely or substantially from plastics material. A hinge provides the required functionality of the pivot member in a simple, inexpensive manner.

Preferably, each conductor support member comprises a tube for single-insulated conductors and/or a gutter section for multiply insulated conductors, so that the device according to the invention is suitable for numerous applications.

In a preferred embodiment, a reinforcing section of the conductor support member is provided, extending over the length of this member and being oriented substantially transversely with respect to the ceiling in the installed position. The result is a strong, lightweight structure of the conductor support member, which structure can be optimized still further by supporting the reinforcing section by a metal strip connected thereto.

The device according to the invention may furthermore comprise a box which is fitted removably over a section of the conductor support member and has a base and a side wall, the base and two mutually opposite parts of the side wall being provided with a recess with a cross section which substantially corresponds to that of the conductor support member.

The two or more conductor support members, one or more securing members, one or more pivot members and one or more boxes of the device according to the invention may form a nonreleasable unit, but the device may also be assembled from separate components or sub-components when these are connected in a suitable way.

The invention also comprises a method for fitting one or more substantially elongate conductor support members, which are intended to accommodate at least one conductor, to a ceiling, comprising:
a. securing at least one securing member to the ceiling;
b. pivotably connecting the at least one securing member and a first end of the at least one conductor support member; and
c. pivoting the at least one conductor support member, which is connected to the at least one securing member, onto the ceiling and securing it thereto.

One advantage is that this method is time-saving, since a single fitter can rapidly fit the at least one conductor support member without help from a colleague. Another advantage is that installation causes little inconvenience, since it can take place without using an auxiliary supporting structure. In this method, it is also possible to carry out the steps denoted by a. and b. in the reverse order.

In a preferred embodiment, the at least one securing member and the at least one conductor support member are produced as a single unit. One advantage is that the conductor support members and pivot members no longer have to be connected to one another on site by the fitter, resulting in a further time saving.

In a preferred embodiment, the at least one conductor is accommodated in the conductor support member before the at least one conductor support member is pivoted onto the ceiling. One advantage is that this also saves time, since the fitter does not have to laboriously position the conductors in the conductor support members at ceiling level, that is to say above his head, but rather may do so at his leisure, for example on the floor or beforehand in the workshop.

Preferably, the steps of the method are repeated, with at least one subsequent securing member and at least one subsequent conductor support member, the at least one subsequent securing member being connected to a second end of the at least one conductor support member which is to be pivoted towards the ceiling. One advantage is that a fitter is able to fit great lengths of conductor quickly and easily to a ceiling by each time attaching at least one subsequent conductor support member of manageable length in accordance with the invention.

To carry out the method, it is possible to use a device according to the invention, but it is also possible for the method to be carried out advantageously using other conductor support members, as will be explained in the description of the figures.

The invention also relates to an assembly of at least one conductor support member and a securing member fitted on a ceiling using the method described above.

In the following text, the invention is explained in more detail with reference to the appended drawing, in which:
Figs 1a, 1b, 1c and 1d show perspective views of components of a device according to the invention;
Fig. 2 shows a cross section through a conductor support member of the device according to the invention, on line II-II in Fig. 1a, on an enlarged scale;
Fig. 3 shows a perspective view of the device shown in Fig. 1 on an enlarged scale and in assembled form;
Figs 4a, 4b and 4c show highly diagrammatic side views, partially in cross section, of various stages of installing the system shown in Fig. 3 on a ceiling;
Fig. 5 shows a highly diagrammatic side view, partially in cross section, of an alternative embodiment of the device according to the invention;
Fig. 6 shows a highly diagrammatic side view, partially in cross section, of yet another alternative embodiment of the device according to the invention;
Figs 7a and 7b show highly diagrammatic side views, partially in cross section, of various stages of fitting yet another embodiment of the device according to the invention to a ceiling;
Fig. 8 shows a perspective side view of yet another embodiment of the device according to the invention;
Figs 9a, 9b and 9c show side views, in steps, of a way in which the method according to the invention is carried out; and
Figs 10a - 10c show highly diagrammatic side views, in steps, of another way of carrying out the method.

Throughout the various figures, identical reference numerals relate to identical components or components with an identical function.

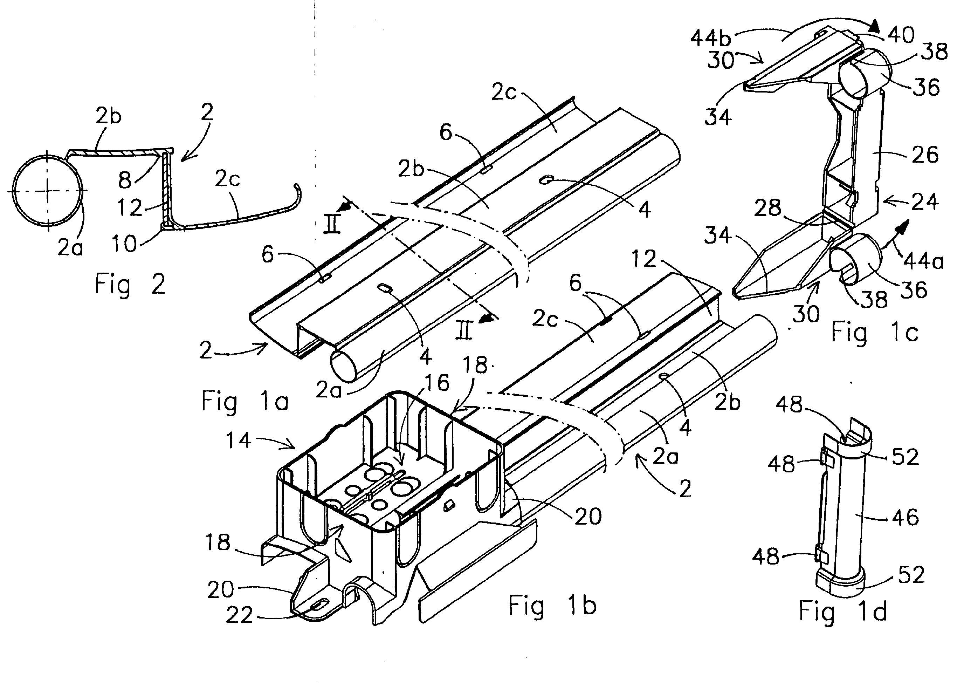

Figs 1a and 2 show part of an elongate conductor support section 2, preferably made from plastics and comprising a tubular part 2a, securing part 2b and gutter-shaped part 2c. As shown in Fig. 2, the parts 2a, 2b and 2c are formed as a single unit, but obviously it is also possible for at least one of these parts to be formed separately and then coupled to the other parts in a suitable way.

At regular intervals, the securing part 2b is provided with slots 4 for accommodating screws or the like, by means of which the conductor support section can be secured to a ceiling as desired. On its base, the gutter-shaped part 2c is provided at regular intervals, on either side, with slots 6 for accommodating cable-bundle straps for fixing conductors in the gutter-shaped part 2c.

The tubular part 2a is intended for single-insulated conductors to pass through, while the gutter-shaped part 2c is intended to accommodate double-insulated conductors.

On the side which is to face away from the ceiling, the securing part 2b is provided with a longitudinal rib 8. On the side which is to face away from the conductors, the gutter-shaped part 2c is provided with a hooked longitudinal edge 10. Together with one side of the gutter-shaped part 2c, the longitudinal rib 8 and the hooked longitudinal edge 10 define an elongate, open space in which a metal, preferably steel, strip 12 can be accommodated in order to increase the flexural strength of the conductor support section 2, in particular if it is made entirely from plastics.

Like Fig. 1a, Fig. 1b shows part of the conductor support section 2, but in this case as seen from the side which is to face away from the ceiling. An electrical box 14, of which an associated lid has been removed and which is preferably made from plastics, on the bottom side 16 and on two mutually opposite sides 18 is shaped and provided with flanges 20 in such a way that the box 14 can be positioned in a clamping manner over at least an end part of the conductor support section 2, but also at any other desired location over the conductor support section 2 and can be detached therefrom. The flanges 20 are each provided with a slot 22 for accommodating a screw or the like for securing the box 14, if appropriate through a slot 4 or at any other desired location through the securing part 2b, to the ceiling.

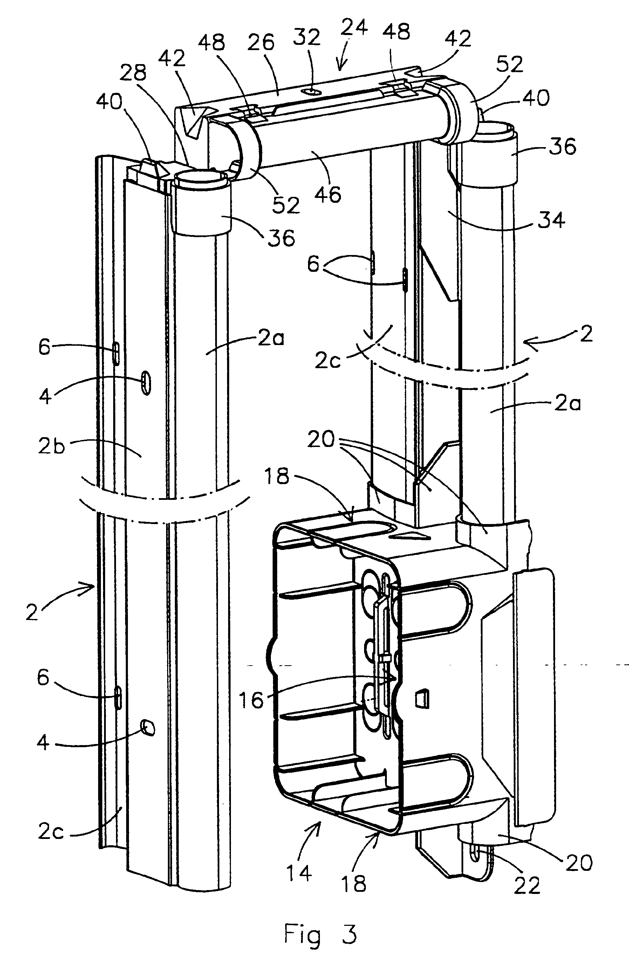

Fig. 1c shows a coupling member 24, which is preferably made entirely from plastics, with a securing member 26 which, via integral hinges 28, is pivotably connected to coupling parts 30. The securing member 26 is provided with a slot 32 (Fig. 3) for accommodating a screw or the like, by means of which the securing member 26 can be secured to the ceiling. Each coupling part 30 comprises an insertion part 34, which is provided with a tapering end and is substantially U-shaped in cross section, and a tube-coupling part 36, which is provided with a longitudinal slot 38 which is closed at one end. On the side remote from the tapering end, the insertion parts 34 are provided with lugs 40, while the securing member 26 is provided with recesses 42.

From the position shown in Fig. 1c, the coupling parts 30 can pivot through 90° about the integral hinges 28, in the directions indicated by arrows 44a, 44b, during which pivoting movement the lugs 40 are received in the recesses 42. The insertion parts 34 can be clamp-fitted into the open space of the conductor support section 2 which is defined by the outer side, facing towards the gutter-shaped section 2c, of the tubular part 2a, that side of the securing part 2b which faces away from the ceiling and that side of the strip 12 which faces away from the gutter-shaped section 2c. In the process, the tube-coupling pieces 36 slide in a clamping manner over the tubular part 2a, and a section of the flange which connects the tubular part 2a to the securing part 2b is received in the slot 38. In this way, the coupling member 24 can be coupled to one or two conductor support sections 2.

Fig. 1d shows an elongate tube-connecting piece 46 which is substantially U-shaped in cross section. On its longitudinal edges, the tube-connecting piece 46 is provided with four hook lugs 48 which are intended to be hooked securely onto the securing member 26 at the location of recesses 50. At both ends, the tube-connecting piece 46 is provided with collar pieces 52 which are intended to engage over the tube-coupling parts 36.

Fig. 3 shows a system of two conductor support sections 2, a coupling member 24, a tube-connecting piece 46, and an electrical box 14 in the assembled, coupled-together form.

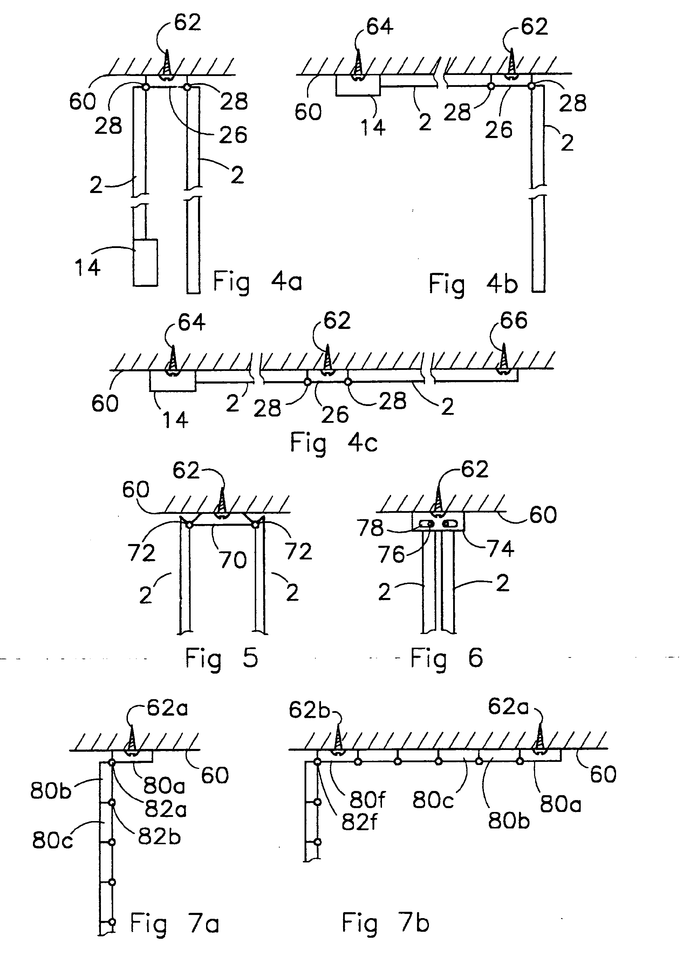

As diagrammatically illustrated in Fig. 4a, when the system shown in Fig. 3 is being installed, firstly the securing member 26 of the coupling member 24 is secured to a ceiling 60, for example by means of a screw 62, with the conductor support sections 2 hanging downwards due to the integral hinges 28. This securing can be carried out by a single fitter. Then, by way of example, as illustrated in Fig. 4b, the box 14 is secured to the ceiling with the aid of the holes 22 in the flanges 20 or with the aid of a screw 64 passing through a single hole in the base 16 of the box 14. This securing can also be carried out by the same single fitter. The conductor support section 2 which is situated between the coupling member 24 and the box 14, because it is rigid, does not itself have to be secured to the ceiling. Finally, as illustrated in Fig. 4c, the other conductor support section 2, at the end remote from the coupling member 24, is secured to the ceiling by a screw 66 via a hole 4 in its securing part 2b. Once again, this securing can be carried out by the same single fitter. To simplify the work involved in securing the system, it is unimportant whether or not the system has already been provided with conductors. However, the total time which the fitter requires for his installation work can be considerably shortened if the system is supplied with the required conductors already provided, for fitting to a ceiling. As can be seen from Fig. 4c, to hang a number of standard lengths of conductor support section 2, it may in principle be sufficient to drill a number of holes in the ceiling 60 to correspond to the number of standard lengths plus one.

It will be clear that the hinged or pivotable connection between a coupling member and a conductor support section can be brought about in a wide variety of ways without departing from the scope of the invention as defined in the appended claims. Thus, Fig. 5 shows a device according to the invention with a securing member 70 which is fitted to the ceiling 60 by a screw 62; conductor support sections 2 may hang downwards due to hinges 72. On the side of the securing member 70, the ends of the conductor support sections 2 are bevelled in such a manner that in the horizontal position of the conductor support sections 2 they are supported on complementary ends of the securing member 70. A design of this nature offers an alternative to the interacting lug 40 and recess 42 shown in Fig. 3.

Fig. 6 shows a device according to the invention with a securing member 74 which is fitted to the ceiling 60 by a screw 62; conductor support sections 2 can hang downwards by dint of pins 76 which are connected to the conductor support sections 2 and fit into slots 78 in the securing member 74, allowing both displacement in the horizontal direction and pivoting in the upwards direction of the conductor support sections.

Fig. 7a shows a device according to the invention with a securing member 80a which is fitted on the ceiling 60 by means of a screw 62a. The securing member 80a is connected, via a hinge 82a, to a similar securing member 80b, which in turn is connected, via a hinge 82b, to a similar securing member 80c, and so on. In this embodiment, the securing member is also the conductor support member, in which case each securing member plus conductor support member may be completely identical, making the production process for the device relatively easy and maintaining a low cost price. As shown in Fig. 7b, it is possible, for example, for the securing member 80f plus conductor support member to be secured to the ceiling 60 by a screw 62b, the hinge 82f allowing other securing members plus conductor support members to hang downwards, thus causing the minimum possible interference during installation of the device. Yet another aspect of this embodiment is that the device, optionally provided with conductors, can easily be rolled up into a roll, which is advantageous for storage and transportation thereof.

In the embodiments shown in Figs 5, 6, 7a and 7b, the conductor support members may optionally comprise a tube part or a gutter part.

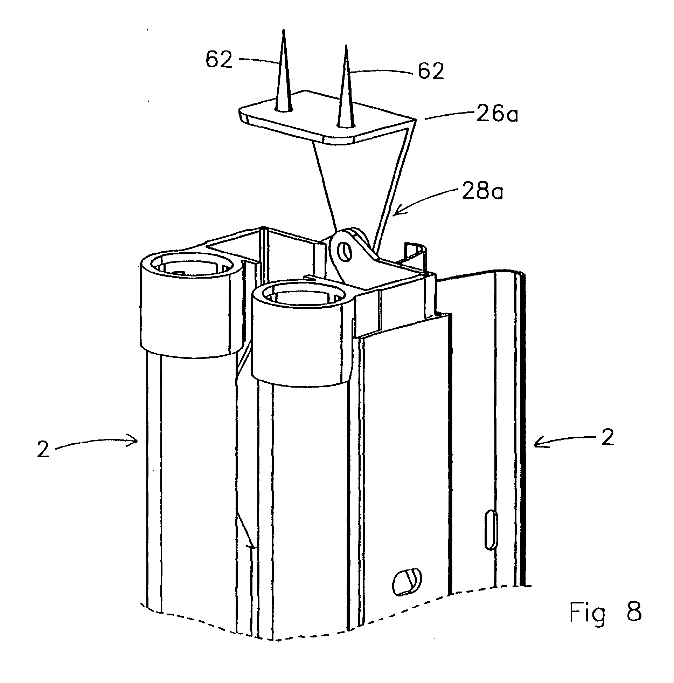

Fig. 8 shows the ends of two conductor support members 2 which are pivotably connected to a securing member 26a by means of a single pivot member 28a. The securing member 26a is provided with holes in order for it to be secured to the ceiling, with the aid of screws 62. The two conductor support members 2 are arranged parallel to each other and, as shown, hang downwards parallel to one another. After the securing member 26a has been secured to the ceiling, the conductor support members 2 can be pivoted towards the ceiling and secured thereto, for example via subsequent securing members (not shown) which are connected to the other end of each conductor support member 2. When the conductor support members have been pivoted towards the ceiling, they are in line with one another.

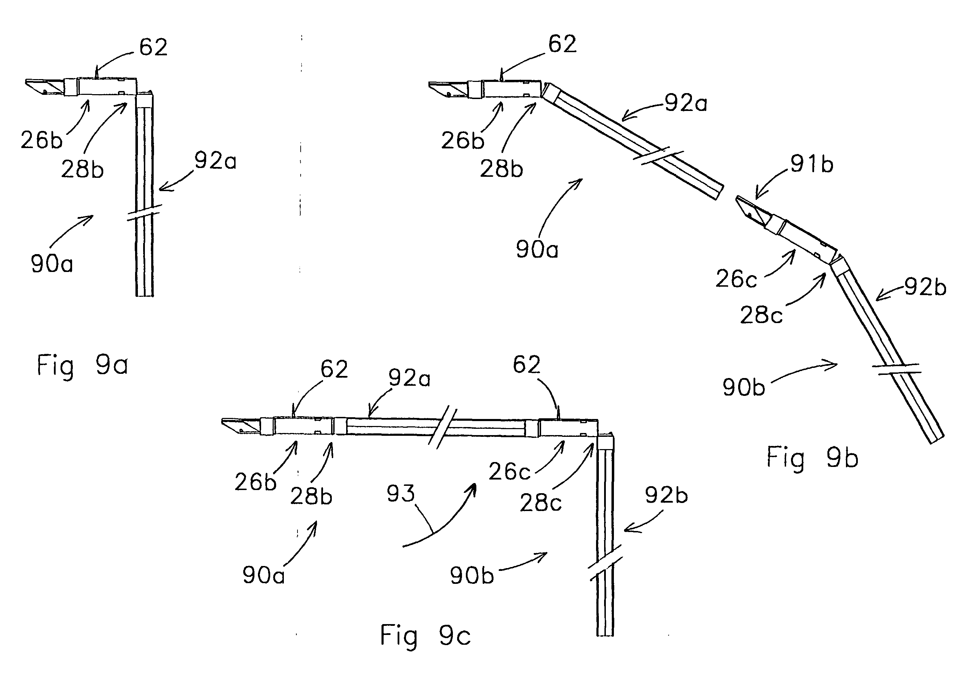

Figs 9a - 9c illustrate a method for fitting a plurality of conductor support members to the ceiling. Fig. 9a shows a first assembly 90a of a conductor support member 92a, a pivot member 28b and a securing member 26b. This assembly may comprise a separate conductor support member 92a, pivot member 28b and securing member 26b which are connected to one another, or alternatively two or more of these constituent components may be produced as a single unit. Firstly, as shown in Fig. 9a, this assembly 90a is secured to the ceiling by securing the securing member 26b using a screw 62. In the process, as shown, the conductor support member 92a connected to the pivot member 28b may hang vertically downwards. Then, as shown in Fig. 9b, a second assembly 90b of a conductor support member 92b, pivot member 28c and securing member 26c is connected to the first assembly by fitting a projecting section 91b of the second securing member 26c into a matching cavity at that end of the first conductor support member 92a which is hanging downwards. Then, as shown in Fig. 9c, the first conductor support member 92a is pivoted towards the ceiling, in the direction indicated by arrow 93, and the second securing member 26c connected thereto is secured to the ceiling by a screw 62. The second conductor support member 92b, which is connected to the second securing member 26c via the second pivot member 28c, is now hanging downwards. The method described can then be repeated by connecting a third assembly (not shown) of a third conductor support member, pivot member and securing member to that end of the second conductor support member 92b which is hanging downwards and by pivoting the second conductor support member 92b towards the ceiling or, in general terms, by connecting a subsequent assembly (not shown) of a conductor support member, pivot member and securing member to that end of a conductor support member which is hanging downwards and by pivoting this conductor support member which is hanging downwards towards the ceiling and by securing the subsequent securing member to the ceiling. In this method, the at least one conductor may be fitted before or after a conductor support member is pivoted towards the ceiling.

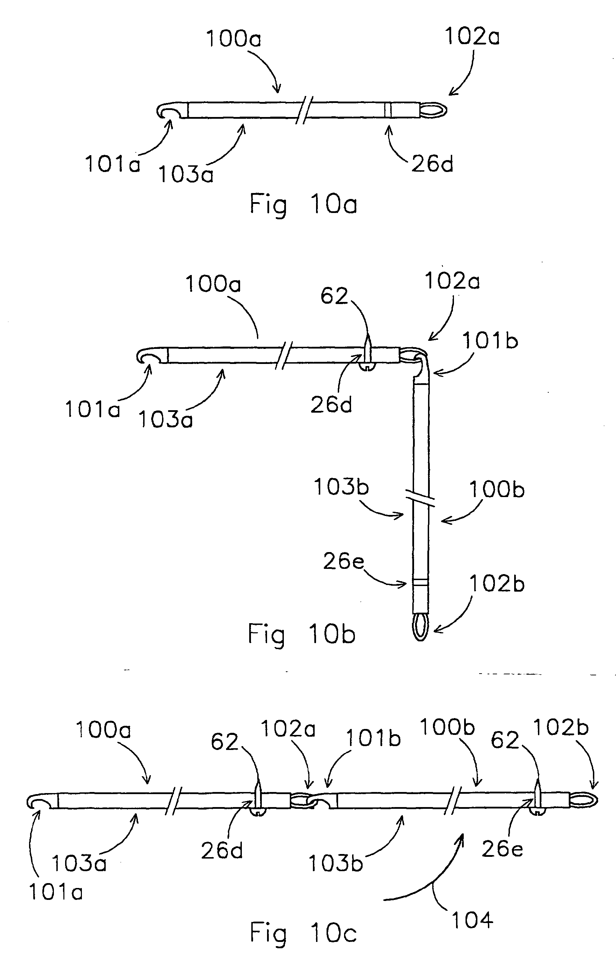

Figs 10a - c illustrate another way of carrying out the method. Fig. 10a shows another embodiment of an assembly 100 of a conductor support member 103a with an integral securing member 26d and pivot member which is produced as a single unit. The pivot member comprises a hook-like element 101a which is situated at one end of the conductor support member 103a and also has the function of connecting the conductor support member 103a to a subsequent conductor support member. For this purpose, the conductor support member 103a is provided, at the opposite end, with an open element 102a in the form of an eyelet, into which the hook-shaped element 101b of a subsequent conductor support member 103b can be hooked. Fig. 10b shows a first conductor support member 103a which is secured to the ceiling by a screw 62. Fig. 10b also shows a second conductor support member 103b which is connected to the first conductor support member 103a as a result of the hook-shaped element 101b of the second conductor support member 103b being hooked into the eyelet-like element 102a of the conductor support member 103a. It is then possible, as shown in Fig. 10c, for the second conductor support member 103b to be pivoted upwards in the direction of arrow 104 and to be attached to the ceiling by the integral securing member 26e using a screw 62. In this way, successive conductor support members can be secured to the ceiling by hooking in each case the next conductor support member with its hook-shaped element into the eyelet-like element of the last conductor support member which was secured to the ceiling, pivoting this next conductor support member towards the ceiling and securing it thereto. In this example, the first conductor support member 103a can be secured to the ceiling in a simple manner, for example by firstly securing a separate eyelet-like element to the ceiling, into which element the hook-shaped element 101a of the first conductor support member 103a can then be hooked. Then, this conductor support member can be pivoted onto the ceiling and secured thereto in the manner described above.

## Claims

1. Device for fitting conductors along a ceiling, comprising at least two conductor support members (2) at least one securing member (26; 26a) and a pivot member (28; 28a) the at least one pivot member (28; 28a) allowing pivoting of the at least two conductor support members (2) such that the conductor support members (2) can be arranged substantially parallel to one another, **characterized in that** the at least one securing member (26; 26a) is pivotably connected, by means of at least one pivot member (28; 28a), to an end of each of the at least two conductor support members (2).

2. Device according to claim 1, **characterized in that** the securing member (26; 26a) comprises securing means (32) for securing the at least one securing member (26; 26a) to the ceiling.

3. Device according to claim 1 or 2, **characterized in that** the connection between the conductor support member (2) and the pivot member (28; 28a) is releasable.

4. Device according to claim 3, **characterized in that** the pivot member (28; 28a) is provided with a projection (34) which is adapted to clamp onto the conductor support member (2).

5. Device according to any of the preceding claims,
**characterized in that** the securing member (26; 26a) is connected to at least two pivot members (28; 28a).

6. Device according to any of the preceding claims,
**characterized in that** the at least one pivot member (28; 28a) is adapted to allow pivoting of each of the conductor support members (2) connected to the at least one pivot member (28; 28a) through at least 90°.

7. Device according to any of the preceding claims,
**characterized in that** the at least one pivot member (28; 28a) comprises a hinge.

8. Device according to claim 7, **characterized in that** the hinge is an integral hinge.

9. Device according to any of the preceding claims,
**characterized in that** each conductor support member (2) comprises a tube (2a).

10. Device according to claim 9, **characterized in that** the securing member (26; 26a) and the at least one pivot member (28; 28a) are provided with means for lengthening the tube (46).

11. Device according to any of the preceding claims,
**characterized in that** each conductor support member (2) comprises a gutter section (2c).

12. Device according to any of the preceding claims,
**characterized by** a reinforcing section of the conductor support member (2), which extends over the length thereof and, in the installed position, is oriented substantially transversally with respect to the ceiling.

13. Device according to claim 12, **characterized in that** the reinforcing section is supported by a metal strip (12) connected thereto.

14. Device according to any of the preceding claims,
**characterized by** a box (14) which is mounted releasably over a section of the conductor support member (2) and has a base (16) and a side wall (18), the base (16) and two mutually opposite parts of the side wall (18) being provided with a recess with a cross section which substantially corresponds to that of the conductor support member (2).

15. Conductor support member (2) intended for use in a device according to any of the preceding claims.

16. Securing member (26; 26a), connected to at least one pivot member (28; 28a) and intended for use in a device according to any of the preceding claims.

17. Box (14) intended for use in the device according to claim 14.

18. Method for fitting one or more substantially elongate conductor support members (92a; 92b; 103a; 103b), which are intended to accommodate at least one conductor, to a ceiling, comprising:
a. securing at least one securing member (26b; 26c; 26d; 26e) to the ceiling;
b. pivotably connecting the at least one securing member (26b; 26c; 26d; 26e) and a first end of the at least one conductor support member (92a; 92b; 103a; 103b); and
c. pivoting the at least one conductor support member (92a; 92b; 103a; 103b), which is connected to the at least one securing member (26b; 26c; 26d; 26e), onto the ceiling and securing it thereto.

19. Method for fitting one or more substantially elongate conductor support members (92a; 92b; 103a; 103b), which are intended to accommodate at least one conductor, to a ceiling, comprising:
a. pivotably connecting at least one securing member (26b; 26c; 26d; 26e) and a first end of the at least one conductor support member (92a; 92b; 103a; 103b);
b. securing the at least one securing member (26b; 26c; 26d; 26e) to the ceiling; and
c. pivoting the at least one conductor support member (92a; 92b; 103a; 103b), which is connected to the at least one securing member (26b; 26c; 26d; 26e) onto the ceiling and securing it thereto.

20. Method according to claim 19, **characterized in that** the at least one securing member (26b; 26c; 26d; 26e) and the at least one conductor support member (92a; 92b; 103a; 103b) are produced as a single unit.

21. Method according to any of claims 18-20, **characterized in that** the at least one conductor is accommodated in the conductor support member (92a; 92b; 103a; 103b) before the at least one conductor support member (92a; 92b; 103a; 103b) is pivoted onto the ceiling.

22. Method according to claim 18 or 19, **characterized in that** the steps a, b and c are repeated at least once with at least one subsequent securing member (26b; 26c; 26d; 26e) and at least one subsequent conductor support member (92a; 92b; 103a; 103b), the at least one subsequent securing member (26b; 26c; 26d; 26e) being connected to a second end of the at least one conductor support member (92a; 92b; 103a; 103b) which is to be pivoted towards the ceiling.

23. Method according to claim 20, **characterized in that** steps b and c from claim 19 are repeated at least once with at least one subsequent securing member (26b; 26c; 26d; 26e) and at least one subsequent conductor support member (92a; 92b; 103a; 103b), the at least one subsequent securing member (26b; 26c; 26d; 26e) being connected to a second end of the at least one conductor support member (92a; 92b; 103a; 103b) which is to be pivoted towards the ceiling.

24. Assembly of at least one conductor support member (92a; 92b; 103a; 103b) and a securing member (26b; 26c; 26d; 26e) fitted to a ceiling using the method described in any of claims 18-23.

## Patentansprüche

1. Vorrichtung zum Montieren von Leitern entlang einer Decke, enthaltend wenigstens zwei Leiterhalteelemente (2), wenigstens ein Befestigungselement (26; 26a) und ein Schwenkelement (28; 28a), wobei das wenigstens eine Schwenkelement (28; 28a) ein Schwenken der wenigstens zwei Leiterhalteelemente (2) derart gestattet, dass die Leiterhalteelemente (2) im wesentlichen parallel zueinander angeordnet werden können, **dadurch gekennzeichnet, dass** das wenigstens eine Befestigungselement (26; 26a) mit Hilfe des wenigstens einen Schwenkelementes (28; 28a) mit einem Ende jedes der wenigstens zwei Leiterhalteelemente (2) verbunden ist.

2. Vorrichtung nach Anspruch 1, **dadurch gekennzeichnet, dass** das Befestigungselement (26; 26a) Befestigungseinrichtungen (32) zum Befestigen des wenigstens einen Befestigungselementes (26; 26a) an der Decke enthält.

3. Vorrichtung nach Anspruch 1 oder 2, **dadurch gekennzeichnet, dass** die Verbindung zwischen dem Leiterhalteelement (2) und dem Schwenkelement (28; 28a) lösbar ist.

4. Vorrichtung nach Anspruch 3, **dadurch gekennzeichnet, dass** das Schwenkelement (28; 28a) mit einem Vorsprung (34) ausgestattet ist, der dazu eingerichtet ist, am Leiterhalteelement (2) zu klemmen.

5. Vorrichtung nach einem der vorhergehenden Ansprüche, **dadurch gekennzeichnet, dass** das Befestigungselement (26; 26a) mit wenigstens zwei Schwenkelementen (28; 28a) verbunden ist.

6. Vorrichtung nach einem der vorhergehenden Ansprüche, **dadurch gekennzeichnet, dass** das wenigstens eine Schwenkelement (28; 28a) dazu eingerichtet ist, dass es ein Schwenken jedes der Leiterhalteelemente (2), die mit dem wenigstens einen Schwenkelement (28; 28a) verbunden sind, um wenigstens 90° gestattet.

7. Vorrichtung nach einem der vorhergehenden Ansprüche, **dadurch gekennzeichnet, dass** das wenigstens eine Schwenkelement (28; 28a) ein Scharnier enthält.

8. Vorrichtung nach Anspruch 7, **dadurch gekennzeichnet, dass** das Scharnier ein integrales Scharnier ist.

9. Vorrichtung nach einem der vorhergehenden Ansprüche, **dadurch gekennzeichnet, dass** das Leiterhalteelement (2) ein Rohr (2a) enthält.

10. Vorrichtung nach Anspruch 9, **dadurch gekennzeichnet, dass** das Befestigungselement (26; 26a) und das wenigstens eine Schwenkelement (28; 28a) mit einer Einrichtung zum Verlängern des Rohres (46) versehen sind.

11. Vorrichtung nach einem der vorhergehenden Ansprüche, **dadurch gekennzeichnet, dass** jedes Leiterhalteelement (2) einen Rinnenabschnitt (2c) enthält.

12. Vorrichtung nach einem der vorhergehenden Ansprüche, **gekennzeichnet durch** einen Verstärkungsabschnitt des Leiterhalteelementes (2), der sich über die Länge desselben erstreckt und in der installierten Position im wesentlichen quer im Bezug auf die Decke ausgerichtet ist.

13. Vorrichtung nach Anspruch 12, **dadurch gekennzeichnet, dass** der Verstärkungsabschnitt von einem Metallstreifen (12) gehalten ist, der mit diesem verbunden ist.

14. Vorrichtung nach einem der vorhergehenden Ansprüche, **gekennzeichnet durch** einen Kasten (14), der lösbar über einem Abschnitt des Leiterhalteelementes (2) angebracht ist und über eine Basis (16) sowie eine Seitenwand (18) verfügt, wobei die Basis (16) und zwei wechselseitig gegenüberliegende Teile der Seitenwand (18) mit einer Ausnehmung versehen sind, die einen Querschnitt hat, der im wesentlichen mit jenem des Leiterhalteelementes (2) korrespondiert.

15. Leiterhalteelement (2), das der Verwendung in einer Vorrichtung gemäß einem der vorhergehenden Ansprüche zugedacht ist.

16. Befestigungselement (26; 26a), das mit wenigstens einem Schwenkelement (28; 28a) verbunden ist und der Verwendung in einer Vorrichtung gemäß einem der vorhergehenden Ansprüche zugedacht ist.

17. Kasten (14), der der Verwendung in der Vorrichtung gemäß Anspruch 14 zugedacht ist.

18. Verfahren zum Montieren wenigstens eines im wesentlichen länglichen Leiterhalteelementes (92a; 92b; 103a; 103b), das wenigstens einen Leiter aufnehmen soll, an einer Decke, umfassend:
a. Befestigen wenigstens eines Befestigungselementes (26b; 26c; 26d; 26e) an der Decke;
b. schwenkbares Verbinden des wenigstens einen Befestigungselementes (26b; 26c; 26d; 26e) und eines ersten Endes des wenigstens einen Leiterhalteelementes (92a; 92b; 103a; 103b); und
c. Schwenken des wenigstens einen Leiterhalteelementes (92a; 92b; 103a; 103b), das mit dem wenigstens einen Befestigungselement (26b; 26c; 26d; 26e) verbunden ist, an die Decke und Befestigen desselben an dieser.

19. Verfahren zum Montieren wenigstens eines im wesentlichen länglichen Leiterhalteelementes (92a; 92b; 103a; 103b), das wenigstens einen Leiter aufnehmen soll, an einer Decke, umfassend:
a. schwenkbares Verbinden wenigstens eines Befestigungselementes (26b; 26c; 26d; 26e) und eines ersten Endes des wenigstens einen Leiterhalteelementes (92a; 92b; 103a; 103b);
b. Befestigen des wenigstens einen Befestigungselementes (26b; 26c; 26d; 26e) an der Decke; und
c. Schwenken des wenigstens einen Leiterhalteelementes (92a; 92b; 103a; 103b), das mit dem wenigstens einen Befestigungselement (26b; 26c; 26d; 26e) verbunden ist, an die Decke und Befestigen desselben an dieser.

20. Verfahren nach Anspruch 19, **dadurch gekennzeichnet, dass** das wenigstens eine Befestigungselement (26b; 26c; 26d; 26e) und das wenigstens eine Leiterhalteelement (92a; 92b; 103a; 103b) als einzige Einheit hergestellt werden.

21. Verfahren nach einem der Ansprüche 18 bis 20, **dadurch gekennzeichnet, dass** der wenigstens eine Leiter im Leiterhalteelement (92a; 92b; 103a; 103b) aufgenommen wird, bevor das wenigstens eine Leiterhalteelement (92a; 92b; 103a; 103b) an die Decke geschwenkt wird.

22. Verfahren nach Anspruch 18 oder 19, **dadurch gekennzeichnet, dass** die Schritte a, b und c wenigstens einmal mit wenigstens einem nachfolgenden Befestigungselement (26b; 26c; 26d; 26e) und wenigstens einem nachfolgenden Leiterhalteelement (92a; 92b; 103a; 103b) wiederholt werden, wobei das wenigstens eine nachfolgende Befestigungselement (26b; 26c; 26d; 26e) mit einem zweiten Ende des wenigstens einen Leiterhalteelementes (92a; 92b; 103a; 103b) verbunden wird, das an die Decke geschwenkt werden soll.

23. Verfahren nach Anspruch 20, **dadurch gekennzeichnet, dass** die Schritte b und c von Anspruch 19 wenigstens einmal mit wenigstens einem nachfolgenden Befestigungselement (26b; 26c; 26d; 26e) und wenigstens einem nachfolgenden Leiterhalteelement (92a; 92b; 103a; 103b) wiederholt werden, wobei das wenigstens eine nachfolgende Befestigungselement (26b; 26c; 26d; 26e) mit einem zweiten Ende des wenigstens einen Leiterhalteelementes (92a; 92b; 103a; 103b) verbunden wird, das an die Decke geschwenkt werden soll.

24. Anordnung wenigstens eines Leiterhalteelementes (92a; 92b; 103a; 103b) und eines Befestigungselementes (26b; 26c; 26d; 26e), die an einer Decke mit Hilfe des Verfahrens angebracht sind, das in einem der Ansprüche 18 bis 23 beschrieben ist.

## Revendications

1. Dispositif de fixation de conducteurs le long d'un plafond, comprenant au moins deux éléments de support de conducteur (2), au moins un élément de fixation (26, 26a) et un élément pivot (28, 28a), l'au moins un élément pivot (28 ; 28a) permettant le pivotement des au moins deux éléments de support de conducteur (2) de telle sorte que les éléments de support de conducteur (2) puissent être agencés de façon sensiblement parallèle les uns par rapport aux autres,
**caractérisé en ce que** l'au moins un élément de fixation (26 ; 26a) est relié de façon pivotante, au moyen d'au moins un élément pivot (28 ; 28a), à une extrémité de chacun des au moins deux éléments de support de conducteur (2).

2. Dispositif selon la revendication 1, **caractérisé en ce que** l'élément de fixation (26 ; 26a) comprend des moyens de fixation (32) pour fixer l'au moins un élément de fixation (26 ; 26a) au plafond.

3. Dispositif selon la revendication 1 ou 2, **caractérisé en ce que** la liaison entre l'élément de support de conducteur (2) et l'élément pivot (28 ; 28a) est détachable.

4. Dispositif selon la revendication 3, **caractérisé en ce que** l'élément pivot (28 ; 28a) est doté d'une saillie (34) qui est adaptée pour se fixer sur l'élément de support de conducteur (2).

5. Dispositif selon l'une quelconque des revendications précédentes, **caractérisé en ce que** l'élément de fixation (26 ; 26a) est relié à au moins deux éléments pivots (28 ; 28a).

6. Dispositif selon l'une quelconque des revendications précédentes, **caractérisé en ce que** l'au moins un élément pivot (28 ; 28a) est adapté pour permettre un pivotement d'au moins 90° de chacun des éléments de support de conducteur (2) reliés à l'au moins un élément pivot (28 ; 28a).

7. Dispositif selon l'une quelconque des revendications précédentes, **caractérisé en ce que** l'au moins un élément pivot (28 ; 28a) comprend une articulation.

8. Dispositif selon la revendication 7, **caractérisé en ce que** l'articulation est une articulation intégrale.

9. Dispositif selon l'une quelconque des revendications précédentes, **caractérisé en ce que** l'élément de support de conducteur (2) comprend un tube (2a).

10. Dispositif selon la revendication 9, **caractérisé en ce que** l'élément de fixation (26 ; 26a) et l'au moins un élément pivot (28 ; 28a) sont dotés de moyens pour allonger le tube (46).

11. Dispositif selon l'une quelconque des revendications précédentes, **caractérisé en ce que** chaque élément de support de conducteur (2) comprend une section de gouttière (2c).

12. Dispositif selon l'une quelconque des revendications précédentes, **caractérisé par** une section de renfort de l'élément de support de conducteur (2), qui s'étend sur la longueur de celui-ci et qui, dans la position installée, est orientée sensiblement transversalement par rapport au plafond.

13. Dispositif selon la revendication 12, **caractérisé en ce que** la section de renfort est supportée par une bande métallique (12) qui lui est reliée.

14. Dispositif selon l'une quelconque des revendications précédentes, **caractérisé par** un boîtier (14) qui est monté de façon amovible sur une section de l'élément de support de conducteur (2) et possède une base (16) et une paroi latérale (18), la base (16) et deux parties mutuellement opposées de la paroi latérale (18) étant dotées d'un creux avec une section transversale qui correspond sensiblement à celle de l'élément de support de conducteur (2).

15. Elément de support de conducteur (2) conçu pour être utilisé dans un dispositif selon l'une quelconque des revendications précédentes.

16. Elément de fixation (26 ; 26a), relié à au moins un élément pivot (28 ; 28a) et conçu pour être utilisé dans un dispositif selon l'une quelconque des revendications précédentes.

17. Boîtier (14) conçu pour être utilisé dans le dispositif selon la revendication 14.

18. Procédé de fixation d'un ou plusieurs éléments de support de conducteur allongés (92a ; 92b ; 103a ; 103b), qui sont conçus pour loger au moins un conducteur, à un plafond, le procédé consistant à :
a. fixer au moins un élément de fixation (26b ; 26c ; 26d ; 26e) au plafond ;
b. relier de façon pivotante l'au moins un élément de fixation (26b ; 26c ; 26d ; 26e) et une première extrémité de l'au moins un élément de support de conducteur (92a ; 92b ; 103a ; 103b) ; et
c. faire pivoter l'au moins un élément de support de conducteur (92a ; 92b ; 103a ; 103b), qui est relié à l'au moins un élément de fixation (26b ; 26c ; 26d ; 26e), sur le plafond et le fixer à celui-ci.

19. Procédé de fixation d'un ou plusieurs éléments de support de conducteur sensiblement allongés (92a ; 92b ; 103a ; 103b), qui sont conçus pour loger au moins un conducteur, à un plafond, le procédé consistant à :
a. relier de façon pivotante au moins un élément de fixation (26b ; 26c ; 26d ; 26e) et une première extrémité de l'au moins un élément de support de conducteur (92a ; 92b ; 103a ; 103b) ;
b. fixer l'au moins un élément de fixation (26b ; 26c ; 26d ; 26e) au plafond ; et
c. faire pivoter l'au moins un élément de support de conducteur (92a ; 92b ; 103a ; 103b), qui est relié à l'au moins un élément de fixation (26b ; 26c ; 26d ; 26e), sur le plafond et le fixer à celui-ci.

20. Procédé selon la revendication 19, **caractérisé en ce que** l'au moins un élément de fixation (26b ; 26c ; 26d ; 26e) et l'au moins un élément de support de conducteur (92a ; 92b ; 103a ; 103b) sont conçus comme une seule unité.

21. Procédé selon l'une quelconque des revendications 18 à 20,
**caractérisé en ce que** l'au moins un conducteur est logé dans l'élément de support de conducteur (92a ; 92b ; 103a ; 103b) avant que l'au moins un élément de support de conducteur (92a ; 92b ; 103a ; 103b) soit pivoté sur le plafond.

22. Procédé selon la revendication 18 ou 19, **caractérisé en ce que** les étapes a, b et c sont répétées au moins une fois avec au moins un élément de fixation suivant (26b ; 26c ; 26d ; 26e) et au moins un élément de support de conducteur suivant (92a ; 92b ; 103a ; 103b), l'au moins un élément de fixation suivant (26b ; 26c ; 26d ; 26e) étant relié à une seconde extrémité de l'au moins un élément de support de conducteur (92a ; 92b ; 103a ; 103b) qui doit être pivoté vers le plafond.

23. Procédé selon la revendication 20, **caractérisé en ce que** les étapes b et c de la revendication 19 sont répétées au moins une fois avec au moins un élément de fixation suivant (26b ; 26c ; 26d ; 26e) et au moins un élément de support de conducteur suivant (92a ; 92b ; 103a ; 103b), l'au moins un élément de fixation suivant (26b ; 26c ; 26d ; 26e) étant relié à une seconde extrémité de l'au moins un élément de support de conducteur (92a ; 92b ; 103a ; 103b) qui doit être pivoté vers le plafond.

24. Ensemble d'au moins un élément de support de conducteur (92a ; 92b ; 103a ; 103b) et d'un élément de fixation (26b ; 26c ; 26d ; 26e) fixé à un plafond en utilisant le procédé décrit dans l'une quelconque des revendications 18 à 23.
